# EUROPEAN PATENT SPECIFICATION

(11) **EP 3 869 059 B1**
(45) Date of publication and mention of the grant of the patent: **19.04.2023**
(21) Application number: 21154664.3
(22) Date of filing: 02.02.2021
(51) Int. Cl.: F16D 48/02

(54) **ASSEMBLY FOR ACTIVATING A CLUTCH IN THE DRIVETRAIN OF A MOTOR VEHICLE**
ANORDNUNG ZUR AKTIVIERUNG EINER KUPPLUNG IM ANTRIEBSSTRANG EINES KRAFTFAHRZEUGS
ENSEMBLE D'ACTIONNEMENT D'UN EMBRAYAGE DANS LE TRAIN D'ENTRAÎNEMENT D'UN VÉHICULE À MOTEUR

(30) Priority: 20.02.2020 DE 102020104504
(43) Date of publication of application: 25.08.2021
(73) Proprietor: FTE automotive GmbH, 96106 Ebern (DE)
(72) Inventor: HEUBNER, Wilhelm, D-96106 Ebern (DE)
(74) Representative: Valeo Powertrain Systems

(56) References cited:
- DE-A1-102011 118 574
- DE-A1-102012 113 113
- DE-A1-102016 220 964
- US-A1- 2003 047 410

## Description

The invention relates to an assembly for activating a clutch in the drivetrain of a motor vehicle. Such assemblies are disclosed in documents: US 2003/047410 A1 or DE 10 2012 113113 A1.

The clutch can be used for additionally engaging an electric motor of a hybrid vehicle. A plurality of these clutches may also be used, for example for switching from one gear ratio to another gear ratio without any interruption in terms of traction force.

A clutch actuator is usually provided for activating the clutch. When the clutch is to be activated, said clutch actuator is suitably supplied with hydraulic fluid such that the desired activation stroke is generated.

When it is predictable to a control unit that the clutch has to be imminently activated, the clutch actuator can be pre-filled such that the clutch is brought close to the point ('kiss point') at which said clutch starts to transmit a torque. However, when a gear shift procedure is triggered suddenly, for example by a manual intervention of a driver, there is a minor temporal delay until the gear shift procedure can actually be carried out.

The object of the invention lies in improving the known assemblies for activating the clutch with a view to minimizing the time for shifting gears.

In order for said object to be achieved, an assembly for activating at least one clutch in the drivetrain of a motor vehicle is provided according to the invention, said assembly having a high-pressure pump and at least one control valve, the high-pressure side of the latter being assigned to the clutch, and having a low-pressure pump which supplies a lubricant/coolant circuit, wherein an accumulator valve is provided, the pressure side thereof being connected to a return-flow side of the control valve, wherein the pressure side of the low-pressure pump is connected between the return-flow side of the control valve and the pressure side of the accumulator valve. The invention is based on the fundamental concept of using the low-pressure pump for filling the clutch actuator, said low-pressure pump being present in any case for lubricating and cooling the clutch or the gearbox with which the clutch interacts. For this purpose, the low-pressure pump is connected to the rear side of the control valve such that the clutch actuator can be filled to a certain extent from said rear side. The advantage lies in that the delivery volume of the low-pressure pump is significantly larger than the delivery volume of the high-pressure pump (at least by a factor of 5, but in most instances by a factor of 10). Accordingly, the clutch can be brought to the point at which said clutch starts to transmit a torque much more rapidly in this way. Once this point has been reached, 'switching over' to an actuation by means of the high-pressure pump can take place, the latter being able to provide the high supply pressure required (usually higher than the pressure of the low-pressure pump by a factor of 5 to 10).

According to one preferred embodiment, two clutches, as can be used in a double-clutch gearbox, are activated so as to shift the transmission of torque from one gear ratio to another gear ratio without any interruption.

More than one control valve is preferably provided, wherein the return-flow sides of all control valves are connected to the pressure side of a single accumulator valve. This enables the pressure ratios on the rear side of the control valves to be set such that the clutch actuators can be pre-filled in the desired manner by way of only one additional valve, specifically the accumulator valve.

The lubricant/coolant circuit, in particular by way of a reservoir vessel of the high-pressure pump, can be connected to the rear side of the accumulator valve. When the delivery flow of the low-pressure pump is not required for pre-filling the clutch actuator, the accumulator valve is opened such that the delivery volume of the low-pressure pump can circulate freely in the lubricant/coolant circuit.

According to one embodiment of the invention it is provided that the low-pressure pump has two pressure outlets which are active as a function of the operating direction of the low-pressure pump, wherein one of the pressure outlets is connected between the return-flow side of the control valve and the pressure side of the accumulator valve, and the other pressure outlet is connected to the lubricant/coolant circuit. In an operating state in which the delivery flow of the low-pressure pump serves exclusively for lubricating and cooling, this has the advantage that the delivery flow does not have to take the detour through the accumulator valve but can be guided directly into the lubricant/coolant circuit. In contrast, when the clutch actuator is to be pre-filled, the low-pressure pump is briefly operated in the opposite rotating direction and the accumulator valve is activated such that the respective clutch actuator is filled through the opened control valve.

An overflow line which leads from the pressure outlet of the lubricant/coolant circuit to the pressure outlet which is connected between the return-flow side of the control valve and the pressure side of the accumulator valve can be provided, wherein a throttle and a check valve are provided in the overflow line. This enables an operating state in which the clutch actuator can be pre-filled as well as a flow of coolant can be provided to the clutch or the clutches, respectively, so as to be able to reliably discharge the thermal losses arising in the transfer of torque from one clutch to the other (and the slippage arising herein).

A heat exchanger to which a bypass is assigned can be provided in the lubricant/coolant circuit. By setting the flow resistances in a suitable manner, a flow path which does not lead through the heat exchanger results in the case of a cold hydraulic fluid, while a flow path through the heat exchanger is automatically set at a higher temperature of the hydraulic fluid.

The lubricant/coolant circuit can run through an inverter and an electric motor, for example, so as to discharge the waste heat arising therein. It is also possible for the lubricant/coolant circuit to run through a gearbox so as to lubricate the relevant bearing points therein.

The invention will be described hereunder by means of various embodiments which are illustrated in the appended drawings. In said drawings:
- Fig. 1: schematically shows an assembly according to the invention, according to a first embodiment;
- Fig. 2: shows the embodiment of Fig. 1 having plotted flow paths in a specific operating state;
- Fig. 3: shows a first embodiment variant of the embodiment of Fig. 1;
- Fig. 4: shows a second embodiment variant of the embodiment of Fig. 1;
- Fig. 5: schematically shows an assembly according a second embodiment of the invention;
- Fig. 6: schematically shows a third embodiment of the invention; and
- Fig. 7: shows an embodiment variant of the embodiment of Fig. 6.

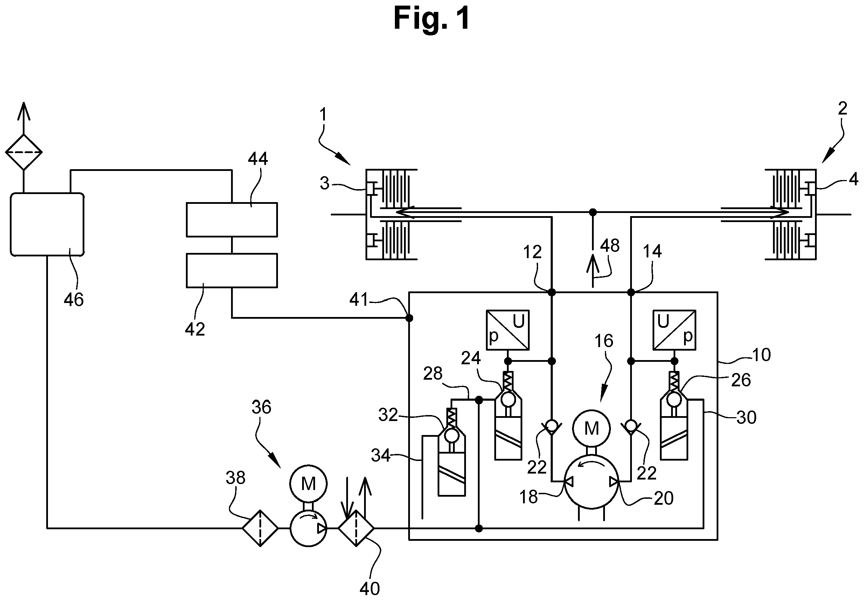

Two clutches 1, 2 which are part of a drivetrain of a motor vehicle are shown in Fig. 1. Said two clutches 1, 2 may be part of a double-clutch gearbox by way of which the drive output can be switched from one gearbox shaft to another gearbox shaft, for example. When the two clutches 1, 2 are actuated in a suitable manner, said switching can take place without any interruption in terms of traction force.

Each of the clutches has a clutch actuator 3, 4 which can be embodied, for example, as a cylindrical housing having an actuator piston disposed therein. An activation stroke and an activation force for the respective clutch can be generated by pressurizing the annular space between the housing and the actuator piston.

A pump apparatus 10 which has two high-pressure outlets 12, 14 to which the clutch actuators 3, 4 are connected is provided for actuating the clutch actuators 3, 4.

The pump apparatus 10 has a high-pressure pump 16 which has two high-pressure outlets 18, 20. When the high-pressure pump 16 is in operation, a hydraulic fluid at a flow rate in the magnitude of one litre per minute and at a pressure in the magnitude of 40 bar is provided at the high-pressure outlets 18, 20.

One check valve 22 as well as one control valve 24, 26 are connected between each high-pressure outlet 18, 20 and each high-pressure connector 12, 14. The control valves 24, 26 are preferably magnetically controlled proportional valves which are open in the non-energized state and which are assigned a pressure sensor.

The pressure at the high-pressure connectors 12, 14 can be controlled in an open loop or a closed loop, respectively, by actuating the control valves 24, 26 in a suitable manner. When the control valves 24, 26 are opened, hydraulic fluid flows from the pressure side of the control valves 24, 26 towards the return-flow side 28, 30.

The return-flow side 28, 30 here leads to the pressure side of an accumulator valve 32 which is likewise embodied as a proportional valve. A return-flow side 34 of the accumulator valve 32 then leads into the interior of the pump apparatus 10 from which the high-pressure pump 16 also suctions its intake.

The assembly also has a low-pressure pump 36 which supplies a lubricant/coolant circuit. A filter 38 and a heat exchanger 40 are part of the lubricant/coolant circuit here too.

The pressure side of the low-pressure pump 36 is connected to the return-flow side 28, 30 of the two control valves 24, 26. The pressure side of the low-pressure pump 36 is thus also connected to the pressure side of the accumulator valve 32. Assuming that the accumulator valve 32 is opened, the lubricant/coolant circuit runs through the accumulator valve and the interior space of the pump apparatus 10 and then through a cooling outlet 41 towards the components which have to be cooled, for example an inverter 42 and an electric motor 44. The coolant circuit can also contain a reservoir vessel 46.

A coolant line which here is fed by a schematically indicated coolant source 48 is provided for cooling the clutches 1, 2.

In a first operating state in which the accumulator valve 32 is opened and the low-pressure pump 36 is in operation, a hydraulic flow circulates through the lubricant/coolant circuit wherein this volume also circulates through the interior space of the pump apparatus. The clutch actuators 3, 4 can simultaneously be actuated in the desired manner by way of the actuator valves 24, 26 since the return-flow sides 28, 30 of the control valves 24, 26 by virtue of the opened accumulator valve 32 are connected in an (almost) loss-free manner to the interior space of the pump apparatus 10.

When one or both of the clutch actuators 3, 4 is to be very rapidly pre-filled so as to bring the respective clutch close to the operating state in which said clutch generates a torque, the accumulator valve 32 is closed and the respective control valve 24, 26 remains opened. On account thereof, the delivery volume of the low-pressure pump 36 is directed "in reverse" through the respective control valve towards the clutch actuator 3, 4.

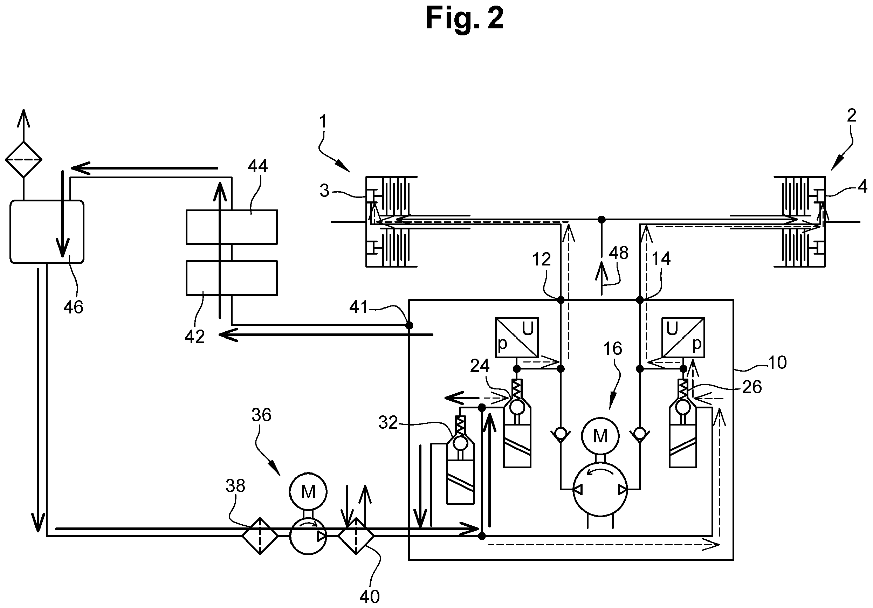

This is shown in Fig. 2. In said Fig. 2, that part of the delivery flow of the low-pressure pump 36 that is used for pre-filling the clutch actuators is plotted with dashed lines.

Since the delivery volume of the low-pressure pump 36 is very much larger than the delivery volume of the high-pressure pump 16, the clutch actuator can be much more rapidly pre-filled in this way. The high-pressure pump 16 in this phase can be operated in parallel so as to further shorten the procedure of pre-filling.

As soon as the clutch actuator 3, 4 is pre-filled in the desired manner, the respective control valve 24, 26 is closed while the accumulator valve 32 is opened. From this point in time, the control valves 24, 26 reassume the actuation of the clutch actuators 3, 4 in the desired manner.

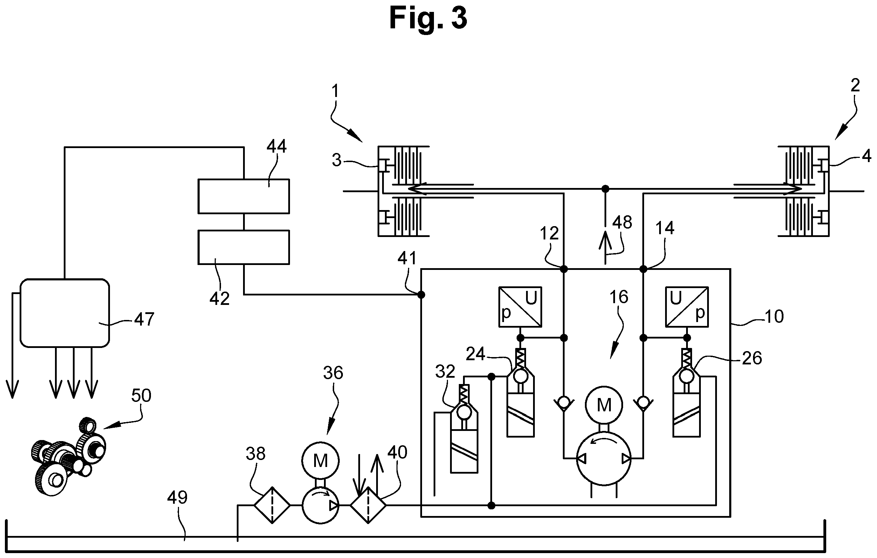

A variant of the first embodiment is shown in Fig. 3. The same reference signs are used for the components known from the first embodiment, and reference to this extent is made to the explanations above.

The difference between the embodiment variant of Fig. 3 and the first embodiment lies in that a dry-sump lubrication with a reservoir vessel 47 is used in the embodiment variant. The low-pressure pump 36 suctions from the sump 49 of a schematically shown gearbox 50.

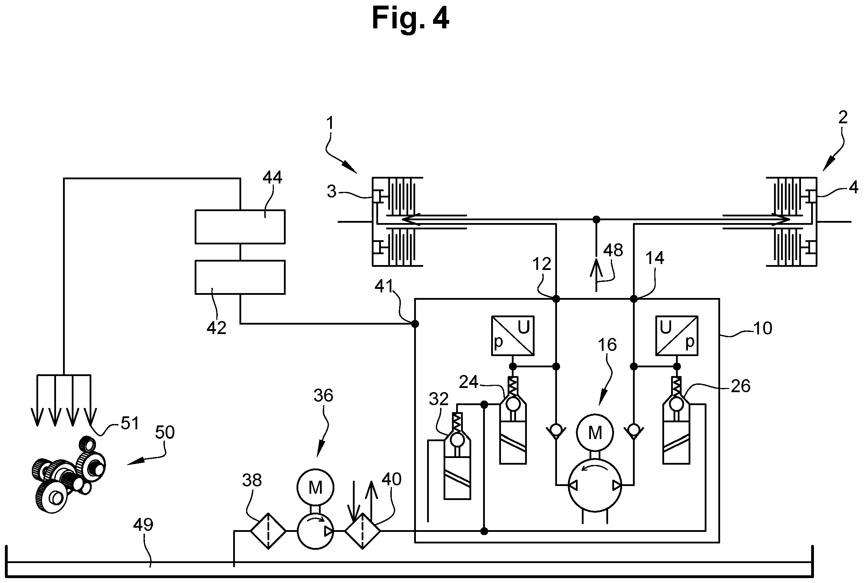

A second embodiment variant of the first embodiment shown in Fig. 1 is illustrated in Fig. 4. The same reference signs are used for the components known from the first embodiment, and reference to this extent is made to the explanations above.

The difference between the second embodiment variant and the first embodiment variant lies in that a pressurized oil lubrication which by way of suitably disposed nozzles 51 supplies the lubrication points of the gearbox 50 is used in the second embodiment variant.

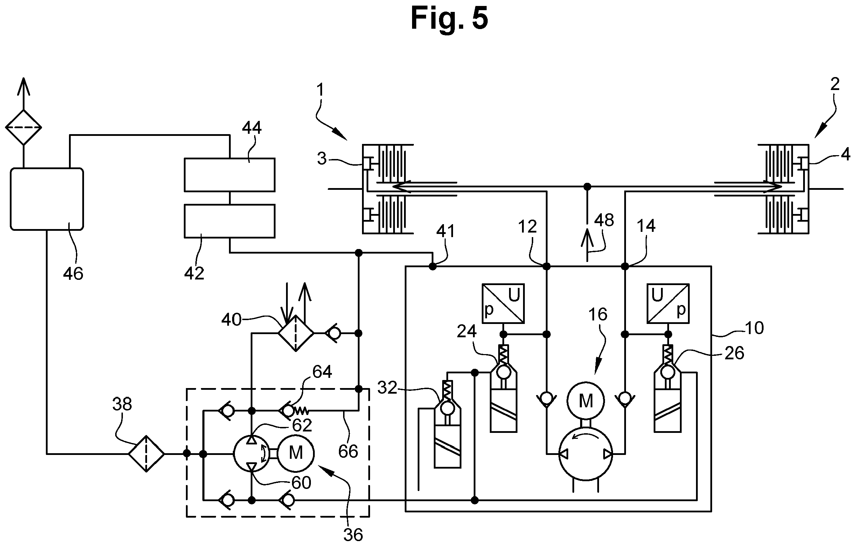

A second embodiment is shown in Fig. 5. The same reference signs are used for the components known from the first embodiment, and reference to this extent is made to the explanations above.

The most substantial difference between the first and the second embodiment lies in that the low-pressure pump 36 in the second embodiment is a reversing pump, thus having two outlets 60, 62, of which, depending on the rotating direction, only one is active as a pressure outlet and the other in this instance is the suction side.

In an operating state of the low-pressure pump 36 in which the latter suctions by way of the outlet 62 and discharges hydraulic fluid by way of the outlet 60, the operating mode corresponds to that known from the first embodiment. The hydraulic fluid provided by the low-pressure pump 36 thus flows through the pump apparatus 10 where said hydraulic fluid, depending on the switched state of the accumulator valve 32, can either be used for pre-filling the clutch actuators 3, 4 or can flow in an non-pressurized state into the pump apparatus 10 where said hydraulic fluid is partially suctioned by the high-pressure pump 16 and largely discharged by way of the cooling outlet 41.

When the high-pressure pump 36 is operated in an operating direction in which said high-pressure pump 36 suctions by way of the outlet 60 and discharges the hydraulic fluid by way of the outlet 62, the hydraulic fluid is fed directly into the coolant circuit. The hydraulic fluid herein, depending on the viscosity thereof, can flow either through the heat exchanger 40 or, while bypassing the heat exchanger, through a throttle valve 64 which is disposed in a bypass 66.

The advantage of the second embodiment lies in that, since the hydraulic fluid does not have to flow through the pump apparatus 10, a somewhat lower flow resistance is prevalent in the operation of the low-pressure pump 36 for the purpose of lubricating and/or cooling.

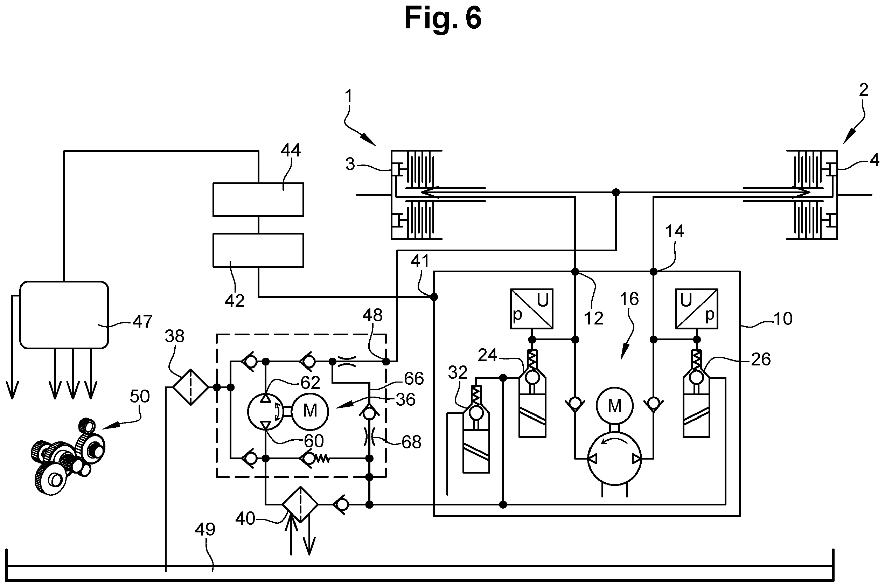

A third embodiment is shown in Fig. 6. The same reference signs are used for the components known from the preceding embodiments, and reference to this extent is made to the explanations above.

The difference between the third and the second embodiment lies in that a dry-sump lubrication is used in the third embodiment.

A further difference between the third and the second embodiment lies in that the heat exchanger 40 in the third embodiment is disposed on the pressure side 60 of the low-pressure pump 36, said pressure side 60 leading to the pump apparatus 10. In this embodiment, the lubricant/coolant circuit again runs through the pump apparatus 10.

When the low-pressure pump 36 is operated in the direction in which the pressure outlet 62 is active, the hydraulic flow serves largely for supplying the lubricant outlet 48 and thus for cooling the clutches 1, 2. Part of the hydraulic flow, by way of a branch 66 and a throttle 68 (and also a suitably disposed check valve), is simultaneously directed towards the pump apparatus 10 such that said part of the hydraulic flow can be used for pre-filling the clutch actuators 3, 4 and for cooling the apparatuses 42, 44.

Finally, the embodiment of Fig. 6 differs from the preceding embodiments in that the coolant line leading to the clutches 1, 2 here is connected to a coolant connector 48 of the low-pressure pump.

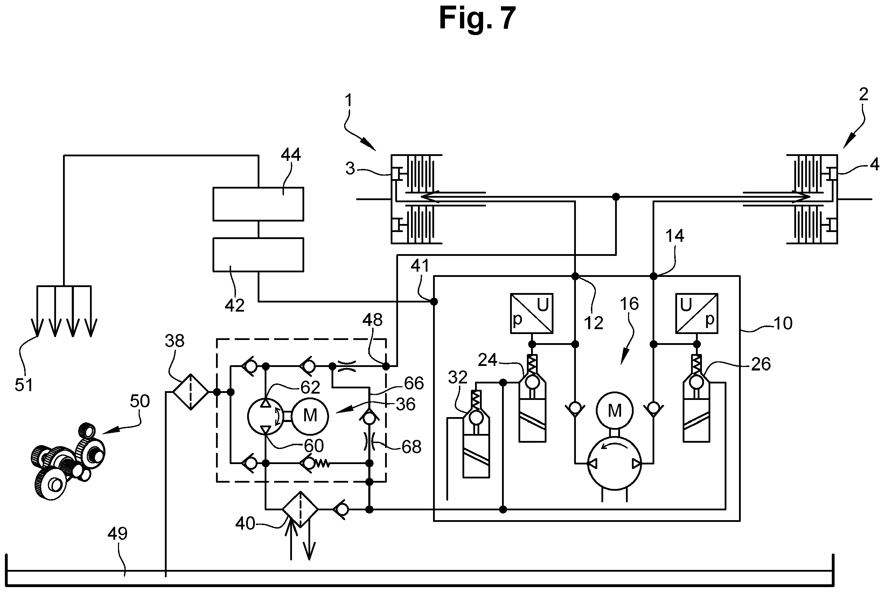

An embodiment variant of the third embodiment is shown in Fig. 7. The same reference signs are used for the components known from the preceding embodiments, and reference to this extent is made to the explanations above.

The difference between the embodiment variant of Fig. 7 and the embodiment shown in Fig. 6 lies in that a pressurized oil lubrication with nozzles 51 is used in the embodiment variant of Fig. 7.

## Claims

1. Assembly for activating at least one clutch (1, 2) in the drivetrain of a motor vehicle, having a high-pressure pump (16) and at least one control valve (24, 26), the high-pressure side of the latter being assigned to the clutch (1, 2), and having a low-pressure pump (36) which supplies a lubricant/coolant circuit, **characterized in that** an accumulator valve (32) is provided, the pressure side thereof being connected to a return-flow side of the control valve (24, 26), wherein the pressure side of the low-pressure pump (36) is connected between the return-flow side of the control valve (24, 26) and the pressure side of the accumulator valve (32).

2. Assembly according to claim 1, **characterized in that** more than one control valve (24, 26) is provided, the return-flow sides thereof being connected to the pressure side of a single accumulator valve (32).

3. Assembly according to claim 1 or claim 2, **characterized in that** the lubricant/coolant circuit, in particular by way of a reservoir vessel of the high-pressure pump (16), is connected to the return-flow side (34) of the accumulator valve (32).

4. Assembly according to one of the preceding claims, **characterized in that** the low-pressure pump (36) has two pressure outlets (60, 62) which are active as a function of the operating direction of the low-pressure pump (36), wherein one of the pressure outlets (60) is connected between the return-flow side of the control valve (24, 26) and the pressure side of the accumulator valve (32), and the other pressure outlet (62) is connected to the lubricant/coolant circuit.

5. Assembly according to claim 4, **characterized in that** an overflow line (66) which leads from the pressure outlet (62) of the lubricant/coolant circuit to the pressure outlet (60) which is connected between the return-flow side of the control valve (24, 26) and the pressure side of the accumulator valve (32) is provided, wherein a throttle and a check valve are provided in the overflow line (68).

6. Assembly according to one of the preceding claims, **characterized in that** the delivery volume of the low-pressure pump (36) is larger than the delivery volume of the high-pressure pump (16) by at least a factor of 5 and preferably by a factor of approximately 10.

7. Assembly according to one of the preceding claims, **characterized in that** the delivery pressure of the high-pressure pump (16) is higher than the delivery pressure of the low-pressure pump (36) by at least a factor of 5 and preferably by a factor of approximately 10.

8. Assembly according to one of the preceding claims, **characterized in that** a heat exchanger (40) to which a bypass (66) is assigned is provided in the lubricant/coolant circuit.

9. Assembly according to one of the preceding claims, **characterized in that** the lubricant/coolant circuit runs through an inverter (42) and an electric motor (44).

10. Assembly according to one of the preceding claims, **characterized in that** the lubricant/coolant circuit runs through a gearbox (50).

11. Assembly according to one of the preceding claims, **characterized in that** said assembly has two high-pressure outlets (12, 14) such that two clutches (1, 2) can be operated in a mutually independent manner.

## Patentansprüche

1. Anordnung zur Aktivierung mindestens einer Kupplung (1, 2) im Antriebsstrang eines Kraftfahrzeugs, mit einer Hochdruckpumpe (16) und mindestens einem Steuerventil (24, 26), wobei die Hochdruckseite des Letzteren der Kupplung (1, 2) zugeordnet ist, und mit einer Niederdruckpumpe (36), die einen Schmiermittel-/ Kühlkreislauf versorgt, **dadurch gekennzeichnet, dass** ein Druckspeicherventil (32) vorgesehen ist, dessen Druckseite an eine Rücklaufseite des Steuerventils (24, 26) angeschlossen ist, wobei die Druckseite der Niederdruckpumpe (36) zwischen der Rücklaufseite des Steuerventils (24, 26) und der Druckseite des Druckspeicherventils (32) angeschlossen ist.

2. Anordnung nach Anspruch 1, **dadurch gekennzeichnet, dass** mehr als ein Steuerventil (24, 26) vorgesehen ist, deren Rücklaufseiten an die Druckseite eines einzigen Druckspeicherventils (32) angeschlossen sind.

3. Anordnung nach Anspruch 1 oder Anspruch 2, **dadurch gekennzeichnet, dass** der Schmiermittel-/ Kühlkreislauf insbesondere über einen Vorratsbehälter der Hochdruckpumpe (16) an die Rücklaufseite (34) des Druckspeicherventils (32) angeschlossen ist.

4. Anordnung nach einem der vorhergehenden Ansprüche, **dadurch gekennzeichnet, dass** die Niederdruckpumpe (36) zwei Druckausgänge (60, 62) aufweist, die abhängig von der Betriebsrichtung der Niederdruckpumpe (36) aktiv sind, wobei einer der Druckausgänge (60) zwischen der Rücklaufseite des Steuerventils (24, 26) und der Druckseite des Druckspeicherventils (32) angeschlossen ist und der andere Druckausgang (62) an den Schmiermittel-/Kühlkreislauf angeschlossen ist.

5. Anordnung nach Anspruch 4, **dadurch gekennzeichnet, dass** eine Überströmleitung (66) vorgesehen ist, die von dem Druckausgang (62) des Schmiermittel-/Kühlkreislaufs zu dem Druckausgang (60) führt, der zwischen der Rücklaufseite des Steuerventils (24, 26) und der Druckseite des Druckspeicherventils (32) angeschlossen ist, wobei in der Überströmleitung (68) eine Drossel und ein Rückschlagventil vorgesehen sind.

6. Anordnung nach einem der vorhergehenden Ansprüche, **dadurch gekennzeichnet, dass** das Fördervolumen der Niederdruckpumpe (36) um mindestens einen Faktor von 5 und vorzugsweise um einen Faktor von ungefähr 10 größer ist als das Fördervolumen der Hochdruckpumpe (16).

7. Anordnung nach einem der vorhergehenden Ansprüche, **dadurch gekennzeichnet, dass** der Förderdruck der Hochdruckpumpe (16) um mindestens einen Faktor von 5 und vorzugsweise um einen Faktor von ungefähr 10 größer ist als der Förderdruck der Niederdruckpumpe (36).

8. Anordnung nach einem der vorhergehenden Ansprüche, **dadurch gekennzeichnet, dass** im Schmiermittel-/Kühlkreislauf ein Wärmetauscher (40) vorgesehen ist, dem ein Bypass (66) zugeordnet ist.

9. Anordnung nach einem der vorhergehenden Ansprüche, **dadurch gekennzeichnet, dass** der Schmiermittel-/Kühlkreislauf durch einen Inverter (42) und einen Elektromotor (44) verläuft.

10. Anordnung nach einem der vorhergehenden Ansprüche, **dadurch gekennzeichnet, dass** der Schmiermittel-/Kühlkreislauf durch ein Getriebe (50) verläuft.

11. Anordnung nach einem der vorhergehenden Ansprüche, **dadurch gekennzeichnet, dass** sie zwei Hochdruckausgänge (12, 14) aufweist, so dass zwei Kupplungen (1,2) unabhängig voneinander betätigt werden können.

## Revendications

1. Ensemble pour actionner au moins un embrayage (1, 2) dans la transmission d'un véhicule à moteur, ayant une pompe haute pression (16) et au moins une vanne de régulation (24, 26), le côté haute pression de cette dernière étant assigné à l'embrayage (1, 2), et ayant une pompe basse pression (36) qui alimente un circuit de lubrifiant/liquide de refroidissement, **caractérisé en ce qu'**une vanne d'accumulation (32) est fournie, le côté de pression de celle-ci étant relié à un côté de retour de la vanne de régulation (24, 26), dans lequel le côté de pression de la pompe basse pression (36) est relié entre le côté de retour de la vanne de régulation (24, 26) et le côté de pression de la vanne d'accumulation (32).

2. Ensemble selon la revendication 1, **caractérisé en ce que** plus d'une vanne de régulation (24, 26) est fournie, les côtés de retour de celles-ci étant reliés au côté de pression d'une seule vanne d'accumulation (32) .

3. Ensemble selon la revendication 1 ou la revendication 2, **caractérisé en ce que** le circuit de lubrifiant/liquide de refroidissement, en particulier au moyen d'un réservoir de la pompe haute pression (16), est relié au côté de retour (34) de la vanne d'accumulation (32) .

4. Ensemble selon l'une des revendications précédentes, **caractérisé en ce que** la pompe basse pression (36) a deux sorties de pression (60, 62) qui sont actives en fonction de la direction de fonctionnement de la pompe basse pression (36), dans lequel l'une des sorties de pression (60) est reliée entre le côté de retour de la vanne de régulation (24, 26) et le côté de pression de la vanne d'accumulation (32), et l'autre sortie de pression (62) est reliée au circuit de lubrifiant/liquide de refroidissement.

5. Ensemble selon la revendication 4, **caractérisé en ce qu'**une conduite de trop-plein (66) qui va de la sortie de pression (62) du circuit de refroidissement/liquide de refroidissement à la sortie de pression (60) qui est reliée entre le côté de retour de la vanne de régulation (24, 26) et le côté de pression de la vanne d'accumulation (32) est fournie, dans lequel un papillon des gaz et un clapet antiretour sont fournis dans la conduite de trop-plein (68).

6. Ensemble selon l'une des revendications précédentes, **caractérisé en ce que** le volume de distribution de la pompe basse pression (36) est supérieur au volume de distribution de la pompe haute pression (16) d'au moins un facteur de 5 et de préférence d'un facteur d'environ 10.

7. Ensemble selon l'une des revendications précédentes, **caractérisé en ce que** la pression de distribution de la pompe haute pression (16) est supérieure à la pression de distribution de la pompe basse pression (36) d'au moins un facteur de 5 et de préférence d'un facteur d'environ 10.

8. Ensemble selon l'une des revendications précédentes, **caractérisé en ce qu'**un échangeur de chaleur (40) auquel une dérivation (66) est assignée est fourni dans le circuit de lubrifiant/liquide de refroidissement.

9. Ensemble selon l'une des revendications précédentes, **caractérisé en ce que** le circuit de lubrifiant/liquide de refroidissement traverse un onduleur (42) et un moteur électrique (44).

10. Ensemble selon l'une des revendications précédentes, **caractérisé en ce que** le circuit de lubrifiant/liquide de refroidissement traverse une boîte de vitesses (50) .

11. Ensemble selon l'une des revendications précédentes, **caractérisé en ce que** ledit ensemble a deux sorties haute pression (12, 14) de telle sorte que deux embrayages (1, 2) peuvent être actionnés de manière mutuellement indépendante.
